(19) Europäisches Patentamt

European Patent Office

Office européen des brevets

(11) Veröffentlichungsnummer: **0 497 998 A1**

## (12) EUROPÄISCHE PATENTANMELDUNG

(21) Anmeldenummer: **91101430.6**

(22) Anmeldetag: **04.02.91**

(51) Int. Cl.5: **A01K 91/10**

(43) Veröffentlichungstag der Anmeldung:
**12.08.92 Patentblatt 92/33**

(84) Benannte Vertragsstaaten:
**AT BE CH DE ES FR GB GR IT LI LU NL SE**

(71) Anmelder: **Schmiegel, Hubert**
**Maystrasse 6**
**W-8480 Weiden(DE)**
Anmelder: **Moller, Robert**
**Am Walpenweiher 1**
**W-8481 Schwarzenbach(DE)**

(72) Erfinder: **Schmiegel, Hubert**
**Maystrasse 6**
**W-8480 Weiden(DE)**
Erfinder: **Moller, Robert**
**Am Walpenweiher 1**
**W-8481 Schwarzenbach(DE)**

(74) Vertreter: **Merten, Fritz**
**Tristanstrasse 5**
**W-8500 Nürnberg 40(DE)**

(54) Vorrichtung zum Angeln von Fischen.

(57) Vorrichtung zum Angeln von Fischen, bestehend aus einem länglichen Gehäuse, welches mit einer Angelschnur verbindbar ist, wobei die Angelschnur nach der einen Seite hin mit einer Angelrute und nach der anderen Seite hin mit einem Angelhaken verbunden ist, wobei das Gehäuse ein in seiner axialen Richtung federndes Spannelement umschließt, welches im Gehäuse in einer lösbaren Spannstellung arretierbar ist, wobei die Spannstellung durch die Arretierung eines mit dem Spannelement verbundenen Spannhakens im Gehäuse bewirkt wird, wobei ferner der Spannhaken mit der mit dem Angelhaken verbundenen Angelschnur verbunden ist, und wobei die Spannstellung durch Zug an dem Angelhaken und die über die Angelschnur auf den Spannhaken übertragene Kraft gelöst wird, und wobei schließlich der Spannhaken (8) durch eine im Gehäuse (1) in axialer Richtung über einen Teil der Länge des Gehäuses (1) sich erstreckende Nut (7) nach außen ragt, der Spannhaken (8) an seinem äußeren Ende eine Öse (13) aufweist, der Spannhaken (8) in der Nut (7) und in dem Gehäuse (1) axial gegen die Kraft des Spannelements (14) verschiebbar ist, die Nut (7) in ihrem unteren Bereich nach einer Seite mit einer kurzen Quernut (7') verbunden ist und der Spannhaken (8) in der Spannstellung des Spannelements (14) in der Quernut (7') liegt.

Fig.6

Die Erfindung betrifft eine Vorrichtung zum Angeln von Fischen mit den Merkmalen des Oberbegriffs des Anspruchs 1.

Beim Angeln war es üblich, den Fisch nach dem Anbeißen durch Hochreißen der Angelschnur anzuhauen und dabei den Angelhaken in das Fischmaul zu treiben. Diese Methode wird heute als unbefriedigend erachtet. Der Angler muß ständig das Gerät im Auge behalten und das Eintreiben des Hakens geschieht weitgehend unkontrolliert. Das Letztere hat zur Folge, daß Fischen, die aus Gründen der Schonung oder auch beim Sportfischen wieder ins Wasser gesetzt werden, häufig Verletzungen im Maulbereich zugefügt werden, die das Tier dauerhaft schädigen und auch besonders schmerzhaft sind.

Es sind Vorrichtungen zum Angeln von Fischen bekannt, die sowohl die ständige Beobachtung des Geräts überflüssig machen, als auch dazu geeignet sind, durch ein automatisches Anhauen den Haken besser kontrolliert in das Fischmaul zu treiben.

So zeigt die US-PS 3,823,501 eine Vorrichtung zum Angeln von Fischen, welche aus einem länglichen Gehäuse besteht, das an beiden Enden mit einer Angelschnur verbindbar ist, wobei die Angelschnur nach der einen Seite hin mit einer Angel und nach der anderen Seite hin mit einem Angelhaken verbunden ist. Das Gehäuse umschließt eine in seiner axialen Richtung federnde Zugfeder, die im Gehäuse in einer lösbaren Spannstellung arretierbar ist. Die Spannstellung wird durch die Arretierung eines mit dem Spannelement verbundenen Spannhakens im Gehäuse bewirkt, wobei der Spannhaken nach einer Seite mit einem Griffende versehen ist, der durch eine axial im Gehäuse verlaufende Nut nach außen ragt und wodurch der Spannhaken axial im Gehäuse verschoben werden kann, und wobei der Spannhaken ferner mit seiner anderen Seite über die Unterkante des nach unten offenen zylindrischen Gehäuses geschoben werden kann. Der Spannhaken ist weiter mit einem nach unten gerichteten Arm versehen, der mit der mit dem Angelhaken verbundenen Angelschnur verbunden ist. Das Gehäuse weist eine nach unten gerichtete Verlängerung auf, über die die Angelschnur so gelegt wird, daß bei einem Zug an dem Haken, die Spannstellung durch die über die Angelschnur auf den Arm des Spannhakens übertragene Kraft gelöst wird.

Nachteilig an dieser Vorrichtung ist, daß die Kraft, die nötig ist, um die Spannstellung zu lösen, nicht fein genug definierbar ist, daß durch die zylindrische Öffnung des Gehäuses Verunreinigungen eingetragen werden können und daß die Angelschnur auseinandergeschnitten werden muß, damit die Vorrichtung angebracht werden kann. Darüber hinaus ist diese bekannte Vorrichtung durch die Form ihrer Einzelteile vergleichsweise aufwendig.

Aufgabe der vorliegenden Erfindung ist es daher, eine Vorrichtung zum Angeln von Fischen zu schaffen, die preiswert herstellbar ist, die eine feine Regulierung der Lösung aus der Spannstellung ermöglicht, die die Gefahr der Verunreinigung weitgehend verhindert und die es nicht erforderlich macht, die Angelschnur zu zerschneiden.

Diese Aufgabe wird mit den im kennzeichnenden Teil des Anspruchs 1 genannten Merkmalen gelöst.

Fortentwicklungen und besondere Ausführungen der Erfindung sind in den Unteransprüchen erfasst.

So ermöglicht die mit der Nut verbundene kurze Quernut und der in diesen laufende Spannhaken, der gleichzeitig als Griff dient, einerseits eine exakte Definition der Kraft, die nötig ist, die Spannstellung zu lösen, andererseits ist die Nut die einzige Öffnung der Vorrichtung, wodurch das Eindringen von Verunreinigungen weitgehend verhindert wird.

Durch die Abstimmung der Kraft des Spannelements, der Neigung der einen Seite der Quernut zur Nut, der Stellung der beiden am Gehäuse angeordneten Vorsprünge, die Löcher für die Angelschnur aufweisen, zueinander und zum Spannhaken, der ebenfalls eine Öse für die Angelschnur aufweist, in der Spannstellung, sowie durch die Anordnung eines Gewichts am unteren Ende des Gehäuses, kann sehr exakt reguliert werden, bei welchem Zug die Spannstellung gelöst wird und mit welcher Kraft der Haken dann in das Fischmaul getrieben wird. Das Gewicht gibt der Vorrichtung vor allem den nötigen festen Halt auf dem Gewässergrund, damit ein definiertes Auslösen überhaupt ermöglicht wird.

Der Aufbau der Vorrichtung aus Halbschalen, auf die endseitig die Endteile aufgesteckt werden, ermöglicht eine Ausführung weitgehend in Kunststoff, wodurch die Vorrichtung geringere Korrosionsprobleme aufweist. Durch die besondere Gestaltung der Endteile und der endseitigen Zapfen der Halbschalen wird die Montage in der gewünschten Position der Teile zueinander erleichtert.

Im Folgenden wird eine Ausführung der Erfindung anhand von Zeichnungen näher beschrieben. Dabei zeigen:

Figur 1) und Figur 2)
zwei Ansichten einer erfindungsgemäßen Vorrichtung in Ruhestellung;

Figur 3) und Figur 4)
die Vorrichtung von Figur 1 und Figur 2 in Spannstellung;

Figur 5)
eine geöffnete Halbschale der gezeigten Vorrichtung mit dem Spannelement;

Figur 6)

die gezeigte Vorrichtung in Spannstellung in Gebrauchsposition.

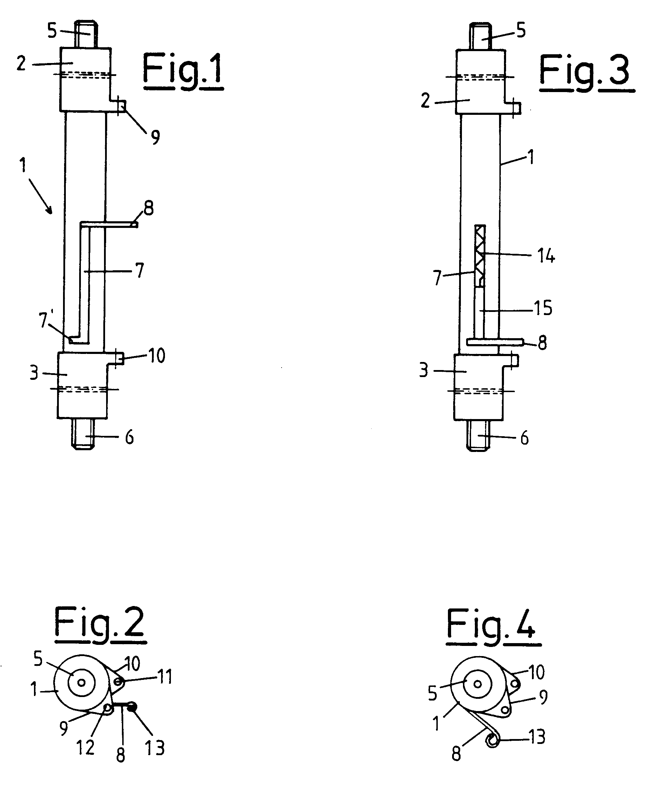

Die erfindungsgemäße Vorrichtung nach Figur 1 und Figur 2 besteht aus einem zylindrischen Gehäuse 1, in welchem gegen die Kraft eines Spannelements längsverschiebbar ein Spannhaken 8 angeordnet ist. Der Spannhaken 8 ragt durch eine in der Wand des Gehäuses 1 verlaufende axiale Nut 7 radial nach außen und ist danach in der radialen Ebene um ca. 90° gebogen. An seinem Ende weist er eine Öse 13 auf. In der hier gezeigten Ruhestellung liegt der Spannhaken 8 im oberen Bereich der Nut 7. Am entgegengesetzten, unteren Bereich der Nut 7 ist eine kurze mit der Nut 7 verbundene Quernut 7' in der Wand des Gehäuses 1 angeordnet. Die Quernut 7' ist bezogen auf den abgebogenen Teil des Spannhakens 8 nach der anderen Seite der Nut 7 ausgerichtet. Das Gehäuse 1 weist an beiden Enden, außerhalb des Bereichs der Nut 7 jeweils Endteile 2, 3 auf, welche auf im Durchmesser verringerte Zapfen des Gehäuses aufgesteckt oder aufgeschraubt sind. Die Endteile 2, 3 weisen wiederum axial zum Gehäuse 1 ausgerichtete Gewindeansätze 5, 6 auf. Weiter weisen die Endteile 2, 3 jeweils einen Vorsprung 9, 10 mit einem Loch 11, 12 für die Angelschnur auf. Beide Vorsprünge 9, 10, sowie der nach außen ragende Teil des Spannhakens 8 sind nach dem der Quernut 7' entgegenliegenden Teil des Gehäuses 1 ausgerichtet. In der Draufsicht ist zu erkennen, daß der obere Vorsprung 9 näher zur Nut 7 hin angeordnet ist, als der untere Vorsprung 10 und daß in dieser Ausführung das nach außen ragende, abgebogene Teil des Spannhakens 8 zwischen den Vorsprüngen 9, 10 liegt.

In der Spannstellung nach Figur 3 und Figur 4 ist dann der Spannhaken in der Nut 7 nach unten gezogen, wobei das nach außen ragende, abgebogene Teil des Spannhakens 8 als Griff dient, und mit dem nach außen ragenden, vor der Biegung befindlichen Stück, in die Quernut 7' eingelegt. In der Nut 7 ist jetzt das Spannelement, d.h. hier eine Zugfeder 14 zu erkennen, sowie ein Führungsstück 15, welches Spannhaken 8 und Zugfeder 15 verbindet. Anstelle der Zugfeder 15 kann auch eine Druckfeder eingesetzt werden, welche dann, ggf. mit einem Führungsteil unterhalb des Spannhakens 8 angeordnet wäre. Die Quernut 7' ist vorteilhafterweise so beschaffen, daß ihre obere Seite leicht schräg zur Nut 7 hin abfällt. Die Schräge darf dabei den Selbsthemmungsbereich für den Spannhaken 8 nicht überschreiten. Durch die Schräge wird jedoch ein leichteres Lösen des Spannhakens 8 ermöglicht. In der Spannstellung ist in dieser Ausführung das nach außen ragende, abgebogene Teil des Spannhakens 8 nun außerhalb des Zwischenraums der Vorsprünge 9, 10, weiter in Richtung auf die Nut 7 hin angeordnet. Grundsätzlich kann der Spannhaken 8 auch ohne eine Biegung verwendet werden. Vorteilhaft ist es jedoch, wenn der Winkel zwischen den nach außen gerichteten Mittelachsen der Vorsprünge 9, 10 weniger als 120°, sowie der Winkel zwischen der nach außen gerichteten Mittelachse des unteren Vorsprungs 10 und dem nach außen gerichteten abgebogenen oder geraden Teil des Spannhakens weniger als 180° beträgt.

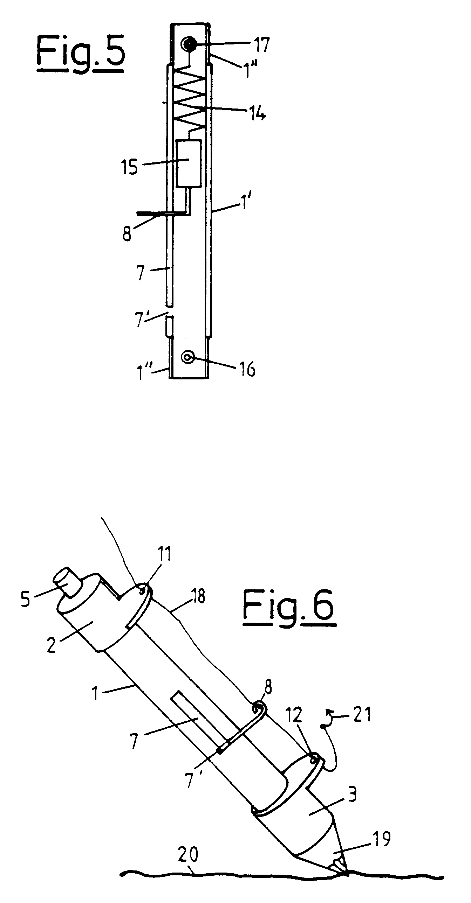

Figur 5 zeigt eine Halbschale 1' des Gehäuses 1, wobei an den Enden die Zapfen 1'' zur Befestigung der Endteile 2, 3 erkennbar sind. Es ist vorteilhaft, diese Zapfen 1'' und die Bohrungen der Endteile 2, 3 mit denen diese auf die Zapfen gesteckt werden, z.B. durch zueinanderpassende Führungsflächen so zu gestalten, daß das Gehäuse 1 und die Endteile 2, 3 mit ihren Vorsprüngen 9, 10 zwangsläufig in der richtigen Position zueinander liegen, wenn die Halbschalen 1' und die Endteile 2, 3 zusammengefügt werden. Im oberen und unteren Bereich der Halbschale 1' befindet sich jeweils ein nach innen gerichteter angespritzter Zapfen 16, 17. Diese Zapfen 16, 17 können zum einen zum Verbinden zweier Halbschalen dienen, wenn diese jeweils zueinander passend geformt sind. Der obere Zapfen 17 dient zugleich zur Befestigung der Zugfeder 14, welche über das zylindrische Führungsstück 15, welches in der Bohrung des Gehäuses 1 gleitet, mit dem Spannhaken 8 verbunden ist. Die Nut 7 mit der Quernut 7' ist vorteilhafterweise an der Seite einer Halbschale 1' angeordnet.

Figur 6 zeigt die Vorrichtung in Gebrauchsposition. Dabei ist auf den Gewindeansatz 6 des unteren Endteils 3 ein Gewicht 19 aufgeschraubt, welches den Schwerpunkt der Vorrichtung bildet und auf dem Grund 20 des Gewässers liegt. Durch das Gewicht 19 wird die Vorrichtung auf dem Grund gehalten. Durch die Löcher 11, 12 der Vorsprünge der Endteile 2, 3, sowie durch die Öse 13 des Spannhakens 8 ist die Angelschnur 18 gezogen und unten endseitig mit dem Angelhaken 21 verbunden. An der Öse 13 ist die Angelschnur mittels z.B. eines Knotens, durch Einklemmen o. ä. befestigt. Die Vorrichtung liegt, je nach Strömung und Position des Anglers, schräg im Wasser. Durch die Angelschnur befinden sich die Vorsprünge der Endteile 2, 3 und der Spannhaken 8 zwangsläufig auf der dem Grund 20 entgegengesetzten Seite der Vorrichtung, so daß die Gefahr einer Beeinträchtigung der Vorrichtung, durch auf dem Grund liegende Gegenstände verringert wird. Zieht ein Fisch mit einer bestimmten Kraft am Angelhaken 21, so gleitet der Spannhaken 8 aus der Quernut 7' und reißt mit der Kraft des Spannelements die Angelschnur 18 und damit den Angelhaken 21 um die Länge der Nut 7 nach oben. Dadurch wird der Angelhaken mit einer klar vorbestimmten Kraft in das Maul des Fisches getrieben.

## Patentansprüche

1. Vorrichtung zum Angeln von Fischen, bestehend aus einem länglichen Gehäuse, welches mit einer Angelschnur verbindbar ist, wobei die Angelschnur nach der einen Seite hin mit einer Angelrute und nach der anderen Seite hin mit einem Angelhaken verbunden ist, wobei das Gehäuse ein in seiner axialen Richtung federndes Spannelement umschließt, welches im Gehäuse in einer lösbaren Spannstellung arretierbar ist, wobei die Spannstellung durch die Arretierung eines mit dem Spannelement verbundenen Spannhakens im Gehäuse bewirkt wird, wobei ferner der Spannhaken mit der mit dem Angelhaken verbundenen Angelschnur verbunden ist, und wobei die Spannstellung durch Zug an dem Angelhaken und die über die Angelschnur auf den Spannhaken übertragene Kraft gelöst wird, **dadurch gekennzeichnet,** daß der Spannhaken (8) durch eine im Gehäuse (1) in axialer Richtung über einen Teil der Länge des Gehäuses (1) sich erstreckende Nut (7) nach außen ragt, daß der Spannhaken (8) an seinem äußeren Ende eine Öse (13) aufweist, daß der Spannhaken (8) in der Nut (7) und in dem Gehäuse (1) axial gegen die Kraft des Spannelements (14) verschiebbar ist, daß die Nut (7) in ihrem unteren Bereich nach einer Seite mit einer kurzen Quernut (7') verbunden ist, und daß der Spannhaken (8) in der Spannstellung des Spannelements (14) in der Quernut (7') liegt.

2. Vorrichtung zum Angeln von Fischen nach Anspruch 1, **dadurch gekennzeichnet,** daß die obere Seite der Quernut (7') an der der Spannhaken (8) in der Spannstellung anliegt, zur Nut (7) hin schräg abfällt, wobei die Neigung der oberen Seite der Quernut (7') den Bereich der Selbsthemmung für den Spannhaken (8) nicht überschreitet.

3. Vorrichtung zum Angeln von Fischen nach Anspruch 2, **dadurch gekennzeichnet,** daß der Winkel zwischen der axialen Nut (7) und der oberen Seite der Quernut (7') zwischen 91 und 97° beträgt.

4. Vorrichtung zum Angeln von Fischen nach Anspruch 1, **dadurch gekennzeichnet,** daß das Gehäuse (1) an seinem unteren Teil mit einem Gewicht (19) verbindbar ist.

5. Vorrichtung zum Angeln von Fischen nach Anspruch 1, **dadurch gekennzeichnet,** daß an dem Gehäuse (1) zwei nach außen gerichtete Vorsprünge (9, 10) angeordnet sind, daß der erste Vorsprung (9) im oberen Bereich des Gehäuses (1) und der zweite Vorsprung im unteren Bereich des Gehäuses (1) angeordnet ist, daß die Vorsprünge (9, 10) Löcher für die Angelschnur (21, 22) aufweisen, und daß die Nut (7) in einem Teil des Gehäuses (1) zwischen den Vorsprüngen (9, 10) angeordnet ist.

6. Vorrichtung zum Angeln von Fischen nach Anspruch 5, **dadurch gekennzeichnet,** daß die Vorsprünge (9, 10) auf dem Gehäuse (1) zueinander versetzt angeordnet sind, daß der Winkel zwischen den nach außen gerichteten Mittelachsen der Vorsprünge (9, 10) weniger als 120° beträgt, daß der untere Vorsprung (10) neben der der Quernut (7') abgewandten Seite der Nut (7) angeordnet ist, und daß der Winkel zwischen der nach außen gerichteten Mittelachse des unteren Vorsprungs (10) und dem nach außen gerichteten Teil des Spannhakens (8) in der Spannstellung weniger als 180° beträgt.

7. Vorrichtung zum Angeln von Fischen nach Anspruch 6, **dadurch gekennzeichnet,** daß das Spannelement eine Zugfeder (14) ist, und daß die Zugfeder (14) im oberen Bereich des Gehäuses (1) befestigt ist.

8. Vorrichtung zum Angeln von Fischen nach Anspruch 6, **dadurch gekennzeichnet,** daß das Spannelement eine Druckfeder ist, die im unteren Bereich des Gehäuses (1) fest oder lose angeordnet ist.

9. Vorrichtung zum Angeln von Fischen nach Anspruch 6, **dadurch gekennzeichnet,** daß das Gehäuse (1) aus zwei Halbschalen (1') besteht, daß die Nut (7) an der Kante mindestens der einen Halbschale (1') verläuft, daß die Halbschalen (1') an ihren Enden im Durchmesser verkleinerte Zapfen (1'') aufweisen,

daß die Zapfen (1'') zur Verdrehsicherung Abflachungen aufweisen,

daß bei zusammengeklappten Halbschalen (1') zylinderförmige Endteile (2, 3) über die Zapfen (1'') geschoben sind,

daß die zylinderförmigen Endteile (2, 3) hierzu Bohrungen aufweisen,

daß die Bohrungen Stege oder dergleichen aufweisen, welche passend zu den Abflachungen angeordnet sind,

und daß die Vorsprünge (9, 10) jeweils an einem der Endteile (2, 3) angeordnet sind.

10. Vorrichtung zum Angeln von Fischen nach Anspruch 7 und 9,
    **dadurch gekennzeichnet**,
    daß mindestens eine Halbschale (1') in ihrem oberen Bereich einen nach innen gerichteten Zapfen (17) aufweist,
    und daß die Zugfeder (14) mit ihrer einen Seite an dem Zapfen (17) befestigt ist.

11. Vorrichtung zum Angeln von Fischen nach Anspruch 9,
    **dadurch gekennzeichnet**,
    daß die Endteile (2, 3) an ihren äußeren Enden Gewindeansätze (5, 6) aufweisen,
    und daß das Gewicht (19) auf dem unteren Gewindeansatz (6) aufschraubbar ist.

12. Vorrichtung zum Angeln von Fischen nach Anspruch 1,
    **dadurch gekennzeichnet**,
    daß das Gehäuse (1) und die Endteile (2, 3) aus Kunststoff gefertigt sind.

Fig.1

Fig.3

Fig.2

Fig.4

6

## Fig.5

## Fig.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-2 850 831 (SETTERDAHL) <br> * das ganze Dokument * <br><br> --- | 1,7 | A01K91/10 |
| X | US-A-2 552 516 (CAMP) <br> * das ganze Dokument * <br><br> --- | 1,2 | |
| A | US-A-4 944 106 (WU) <br> * Abbildung 2 * <br><br> --- | 9 | |
| A | US-A-3 771 250 (HELMKE) <br> * das ganze Dokument * <br><br> ----- | 8 | |
| | | | **RECHERCHIERTE SACHGEBIETE (Int. Cl.5 )** <br><br> A01K |

Der vorliegende Recherchenbericht wurde für alle Patentansprüche erstellt

| Recherchenort | Abschlußdatum der Recherche | Prüfer |
|---|---|---|
| DEN HAAG | 25 SEPTEMBER 1991 | VERDOODT S.J.M. |